Europäisches Patentamt

European Patent Office

Office européen des brevets

(19)

(11) **EP 1 308 892 A2**

(12) **EUROPEAN PATENT APPLICATION**

(43) Date of publication:
**07.05.2003 Bulletin 2003/19**

(51) Int Cl.7: **G06T 5/50**

(21) Application number: **02020232.1**

(22) Date of filing: **10.09.2002**

| | |
|---|---|
| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI** | (72) Inventors:<br>• **Akiyoshi, Kozo**<br>  **Tokyo 106-0045 (JP)**<br>• **Akiyoshi, Nobuo**<br>  **Tokyo 106-0045 (JP)**<br>• **Miura, Shinya**<br>  **Tokyo 106-0045 (JP)** |
| (30) Priority: **02.11.2001 JP 2001338323** | |
| (71) Applicant: **Monolith Co., Ltd.**<br>**Tokyo 106-0045 (JP)** | (74) Representative: **Pfenning, Meinig & Partner GbR**<br>**Mozartstrasse 17**<br>**80336 München (DE)** |

(54) **Image interpolation method and apparatus for generating virtual facial expressions**

(57)    A key frame storage (16) stores a plurality of key frames representing various facial expressions. An intermediate frame position acquiring unit (14) acquires the position of an intermediate frame representing an intermediate-like facial expression, relative to key frames. A matching processor (18) computes matching between key frames that surround the intermediate frame. An intermediate frame generator (22) produces an intermediate frame based on a matching result.

Fig.20

## Description

The present invention relates to image interpolation techniques, and it particularly relates to method and apparatus for interpolating digital images as well as method and apparatus for processing images.

With wide spread of the Internet into the everyday life of the general public, the Internet is also being actively used for those other than business and academic purposes. The fact that PCs (personal computer) and portable telephones are available at low prices and the network infrastructures has been substantiated accounts for the popularization of the Internet. As a result, the transmission and collection of information from individuals become very easy, and electronic mail (Email) has been recognized as useful communication tool for everyone. The Email can be transmitted and received with ease unlike telephone which is constrained by time in consideration of a call receiving party, and the contents of the Email are generally closer to the conversation style than that of the letter.

Until the emergence of communication utilizing such electronic media, letters and facsimiles using paper media were the major sources of communication tools. However, those are not suitable for conversational use in which short messages are frequently exchanged between other parties, and are surely inferior to Email in terms of convenience.

Though the contents exchanged in a manner of having conversation are put into sentences as they are, tone or visual emotional expression attached to the actual conversation is not necessarily reflected fully on the sentences. Thus, some misunderstanding might be caused in other party. Since the party who receives your message cannot grasp the sender's emotion auditorily or visually, the receiving party has no other choice but speculates the sender's intention based on the context only. Thus, in a case where some misunderstanding might be caused depending on its contents, one must be extra sensitive to the sentences one writes even as mere Email message in order not to cause any misunderstanding in the receiving party.

As a way to communicate one's feelings to the receiving party in Email, on the other hand, so-called "smiley marks" are utilized occasionally. However, these smiley marks, which are multifariously designed, are insufficient in communicating complicated emotions.

The present invention has been made in view of the foregoing circumstances and an object thereof is to provide an image interpolation and processing technology by which to express and represent complex emotions by an image.

Although the present invention relates to the image interpolation and processing technology, this technology is not necessarily utilized for processing static images alone. For example, generation processing of moving images and its compressing technique are similarly achieved thereby and are of course encompassed within the use of the present invention.

A preferred embodiment of the present invention relates to an image interpolation method. This method includes the following steps of:

(1) acquiring a first image pair comprised of two key frames each of which includes a subject photographed with an arbitrary facial expression, and first corresponding point data between the two key frames;

(2) acquiring a second image pair comprised of two key frames each of which includes a subject photographed with an arbitrary facial expression, and second corresponding point data between the two key frames; and

(3) generating an intermediate frame representing an intermediate facial expression by interpolation, by utilizing positional relations of a first axis and a second axis, the first corresponding point data and the second corresponding point data, wherein the first axis is determined temporally or spatially between the two key frames of the first image pair, and the second axis is determined temporally or spatially between the two key frames of the second image pair.

In the above (1) and (2), both the first corresponding point data and the second corresponding point data may be obtained by matching between the key frames. In the above (3), a bilinear interpolation may be performed using the first axis and the second axis. As an example, key frames obtained from two viewpoints that are p1(0,0) and p2 (0,100) serve as the first image pair while key frames obtained from another two viewpoints that are p3(100,0) and p4 (100,100) as the second image pair. A straight line connecting points p1 and p2 corresponds to the first axis while a straight line connecting points p3 and p4 corresponds to the second axis.

In a case where an image, which serves as an intermediate frame, viewed from a viewpoint p'=(50,50) is to be obtained, a frame from a viewpoint (0,50) is first generated based on the corresponding point data between the first image pair. Next, another frame from a viewpoint (100,50) is generated based on corresponding point data between the second image pair. Thereafter, an interpolation is performed on these two frames, namely, they are interior-divided at a ratio of 1:1, so that a desired intermediate frame is generated. Here, in order to perform an interpolation in both the vertical and horizontal directions, it is generally preferable that the first image pair and the second image pair are determined so that the first axis and the second axis do not lie on a same line.

Although in the above example the first axis and the second axis are spatially determined respectively between the two key frames, there is another example in which the first axis and the second axis are determined temporally. For example, it is supposed that two key frames obtained from a viewpoint P at time t=t0 and t=t1 serve as the first image pair while two key frames obtained from another viewpoint Q at time t=t0 and t=t1 serve as the second image pair. In this case, a straight line connecting a point defined by (P, t0) and a point defined by (P, t1) in the fist image pair becomes the first axis, and similarly a straight line connecting a point defined by (Q, t1) and a point defined by (Q, t1) in the second image pair becomes the second axis. Thus, if it is supposed that an image from, for example, a point ((P+Q)/2, (t0+t1)/2) is regarded as an intermediate frame, it is preferable that after intermediate-like images are generated in the respective two axes, the intermediate-like images are interpolated. Hereinafter, time and space are treated as mere parameters in four dimensions, and will not be separated from each other in any particular manner.

The image interpolation method may further comprise: arranging the acquired plurality of key frames in a matrix at predetermined intervals, and displaying the arranged key frames on a screen; and causing a user to specify an arbitrary point on the screen, wherein the interpolation may be performed based on positional relations between the specified point and each of the key frames. The two key frames of the first image pair and the two key frames of the second image pair may be facial images with different expressions photographed for a same person. The "interpolation" may be extrapolation. For example, when the user specifies an arbitrary point outside the matrix where a plurality of images are arranged, an intermediate frame is generated by extrapolation. Terms "in a matrix," or "in the matrix form," does not intend to limit the terms to mean that a plurality of key frames are disposed in the form of matrix, instead, three key frames, for instance, may be arranged in a triangle, or more than three key frames may be arranged in any arbitrary shape as long as those key frames do not lie on a straight line.

One of the two key frames in the first image pair and one of the two key frames in the second image pair may be put to a common use, and the interpolation may be performed based on a triangle having the first axis and the second axis as two sides thereof. Moreover, the two key frames in the first image pair and the two key frames in the second image pair are not put to a common use, and the interpolation may be performed based on a quadrilateral having the first axis and the second axis as two sides counter to each other. When the first and second corresponding point data are detected, this process may be such that the matching is computed pixel by pixel based on correspondence between critical points detected through respective two-dimensional searches on the two key frames. The detecting process may include: multiresolutionalizing the two key frames by respectively extracting the critical points; performing a pixel-by-pixel matching computation on the two key frames, at between same resolution levels; and acquiring a pixel-by-pixel correspondence relation in a most fine level of resolution at a final stage while inheriting a result of the pixel-by-pixel matching computation to a matching computation in a different resolution level.

Another preferred embodiment of the present invention relates to an image interpolation apparatus. This apparatus includes: a storage unit which stores a plurality of key frames each of which includes a subject photographed with an arbitrary facial expression; an acquiring unit which acquires temporal or spatial position data on an intermediate frame representing an intermediate facial expression, in association with the key frames; and an intermediate frame generating unit which generates an intermediate frame by an interpolation processing, based on corresponding point data on a first image pair comprised of two key frames and a second image pair comprised of two key frames, and the position data, wherein those pairs are selected so that a first axis determined temporally or spatially between the two key frames of the first image pair and a second axis determined temporally or spatially between the two key frames of the second image pair do not lie on a same line. This apparatus may further include a matching processor which generates corresponding point data.

The matching method utilizing the critical points is the application of the technology (hereinafter referred to as "base technology") proposed in Japanese Patent No. 2927350 owned by the same assignee of the present patent application, and is suited for the above-described detecting process. However, the base technology does not touch on the interpolation performed along the vertical and horizontal directions. By implementing a new technique according to the present invention, a facial image having an intermediate expression can, for example, be produced from a plurality of facial images having different expressions.

The image interpolation apparatus may further include: a unit which arranges the plurality of key frames in a matrix at predetermined intervals, and displays the arranged key frames on a screen; and a user interface by which to input externally a specification regarding a temporal or spatial position of the intermediate frame. The two key frames of the first image pair and the two key frames of the second image pair may be facial images with different expressions photographed for a same person.

A plurality of corresponding point files which describe corresponding points between the key frames may be prepared or acquired, and a blending or mixing processing may be performed on these so as to generate a new corresponding point file. The "blending processing" may be, for example, the bilinear interpolation. In order to acquire the corresponding point file, a matching processor described later may be utilized. There may be further included a processing in which an intermediate frame between the key frames is generated, by interpolation, based on the thus generated new corresponding point file.

This image interpolation apparatus may be realized in the form of a server provided on a network. For example, images that will be used as key frames are photographed at a user side by a camera function built in a communication terminal such as a portable telephone, and the photographed images are transferred to the image interpolation apparatus. Then, the image interpolation apparatus performs a matching processing on these images in accordance with a user instruction received via the portable telephone, generates a face image having intermediate-like expression and transmits the thus generated face image to the portable telephone. In a case when an interpolation processing function is already equipped in the portable telephone, the image interpolation apparatus may transmit to the portable telephone the corresponding point data only.

Still another preferred embodiment of the present invention relates also to an image interpolation method. This method includes: displaying to a user a plurality of images corresponding to various facial expressions; acquiring from the user an instruction on how the images are to be blended; and generating a new image corresponding to an initially nonexistent expression, according to the instruction, wherein the instruction is acquired in a manner that blending ratios of the plurality of images at the time of blending are included in the instruction. On a screen that displays the plurality of images, the blending ratios may be determined based on a relation between display positions of the images and an effecting position that the user inputs to specify on the screen.

Still another preferred embodiment of the present invention relates to an image editor. This editor comprises the functions of: displaying to a user a plurality of images corresponding to various facial expressions; acquiring from the user an instruction on how the images are to be blended; and generating a new image corresponding to an initially nonexistent expression, according to the instruction, wherein the instruction is acquired in a manner that blending ratios of the plurality of images at the time of blending are included in the instruction.

Still another preferred embodiment of the present invention relates also to an image interpolation method. By implementing this method, a new image corresponding to an initially nonexistent expression is generated by performing an interpolation processing on at least three images corresponding to various expressions.

It is to be noted that the base technology is not indispensable for the present invention. Moreover, any arbitrary replacement or substitution of the above-described structural components and the steps, expressions replaced or substituted in part or whole between a method and an apparatus as well as addition thereof, and expressions changed to a computer program, recording medium or the like are all effective as and encompassed by the present embodiments.

Moreover, this summary of the invention does not necessarily describe all necessary features so that the invention may also be sub-combination of these described features.

Fig. 1a is an image obtained as a result of the application of an averaging filter to a human facial image.

Fig. 1b is an image obtained as a result of the application of an averaging filter to another human facial image.

Fig. 1c is an image of a human face at $p^{(5,0)}$ obtained in a preferred embodiment in the base technology.

Fig. 1d is another image of a human face at $p^{(5,0)}$ obtained in a preferred embodiment in the base technology.

Fig. 1e is an image of a human face at $p^{(5,1)}$ obtained in a preferred embodiment in the base technology.

Fig. If is another image of a human face at $p^{(5,1)}$ obtained in a preferred embodiment in the base technology.

Fig. 1g is an image of a human face at $p^{(5,2)}$ obtained in a preferred embodiment in the base technology.

Fig. 1h is another image of a human face at $p^{(5,2)}$ obtained in a preferred embodiment in the base technology.

Fig. 1i is an image of a human face at $p^{(5,3)}$ obtained in a preferred embodiment in the base technology.

Fig. 1j is another image of a human face at $p^{(5,3)}$ obtained in a preferred embodiment in the base technology.

Fig. 2R shows an original quadrilateral.

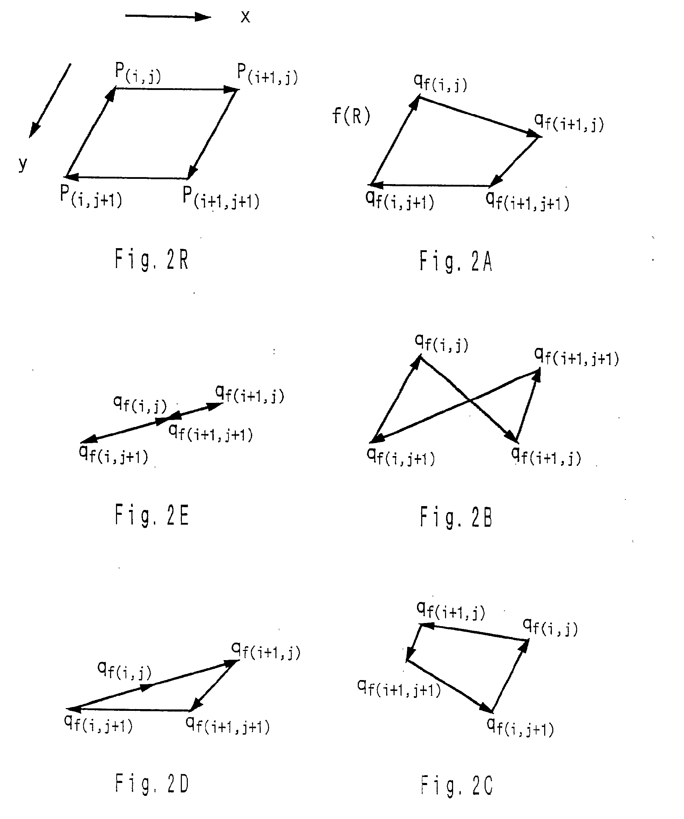

Fig. 2A shows an inherited quadrilateral.

Fig. 2B shows an inherited quadrilateral.

Fig. 2C shows an inherited quadrilateral.

Fig. 2D shows an inherited quadrilateral.

Fig. 2E shows an inherited quadrilateral.

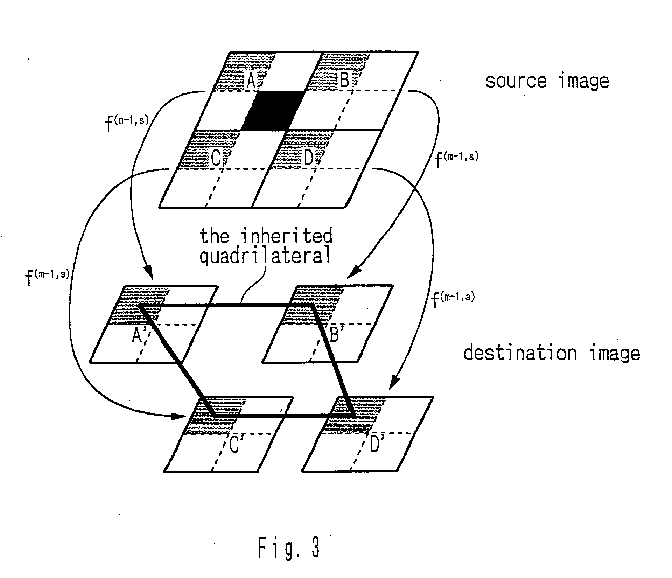

Fig. 3 is a diagram showing the relationship between a source image and a destination image and that between the m-th level and the (m-1)th level, using a quadrilateral.

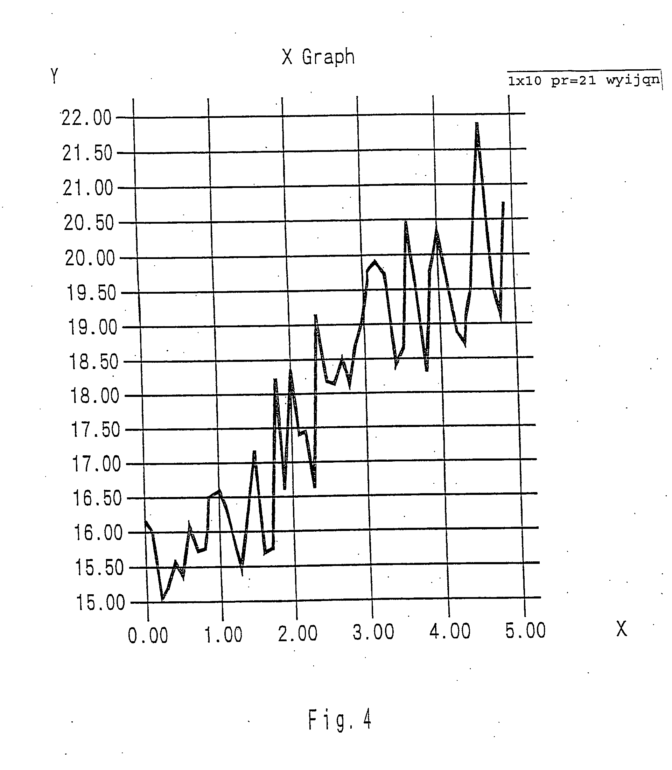

Fig. 4 shows the relationship between a parameter η (represented by x-axis) and energy $C_f$ (represented by y-axis).

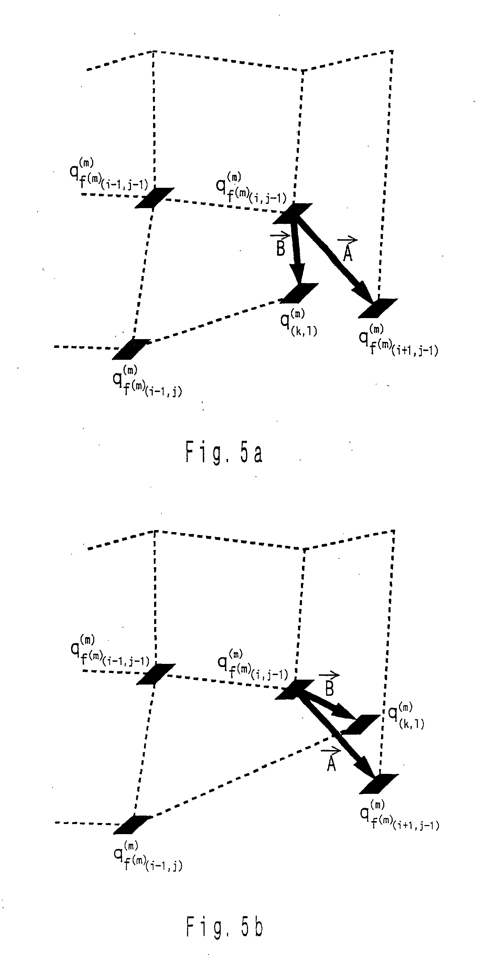

Fig. 5a is a diagram illustrating determination of whether or not the mapping for a certain point satisfies the bijectivity condition through the outer product computation.

Fig. 5b is a diagram illustrating determination of whether or not the mapping for a certain point satisfies the bijectivity condition through the outer product computation.

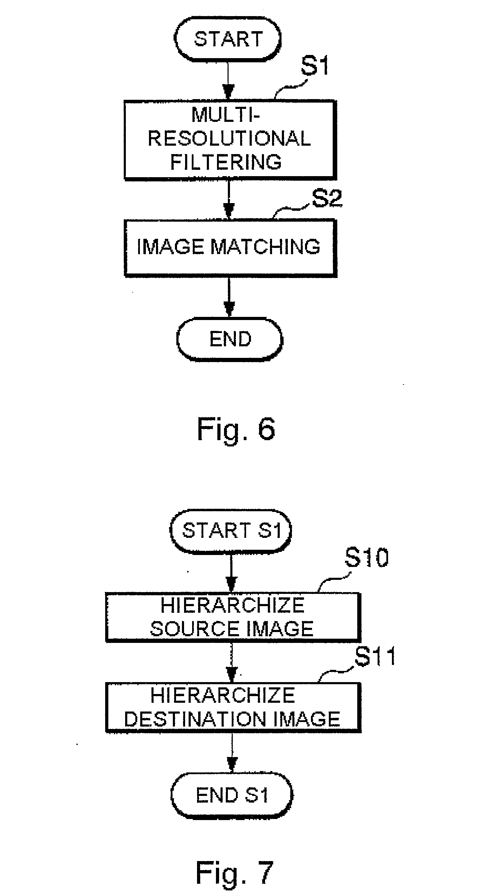

Fig. 6 is a flowchart of the entire procedure of a preferred embodiment in the base technology.

Fig. 7 is a flowchart showing the details of the process at S1 in Fig. 6.

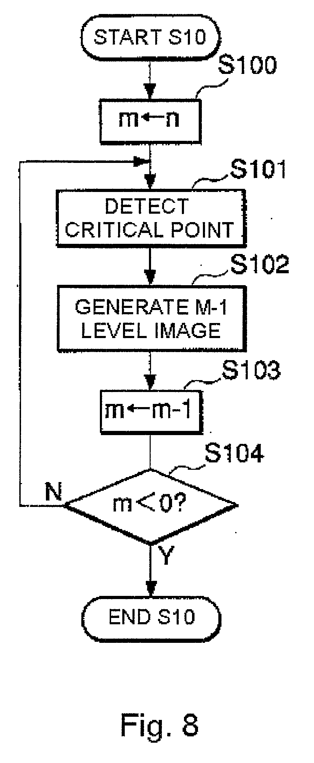

Fig. 8 is a flowchart showing the details of the process at S10 in Fig. 7.

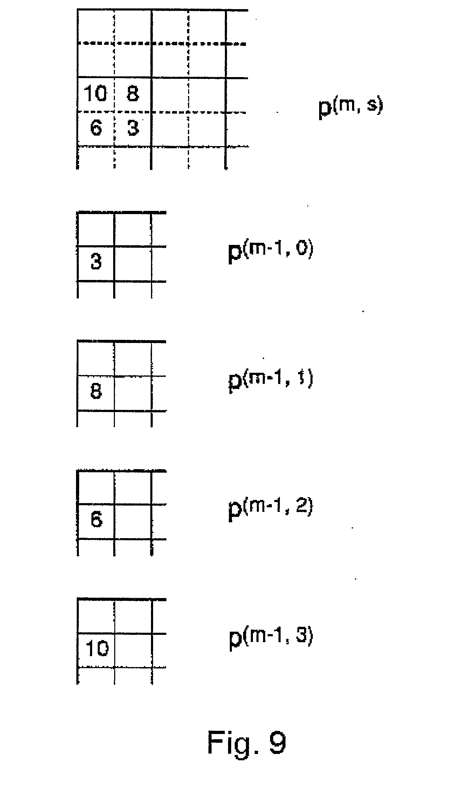

Fig. 9 is a diagram showing correspondence between partial images of the m-th and (m-1)th levels of resolution.

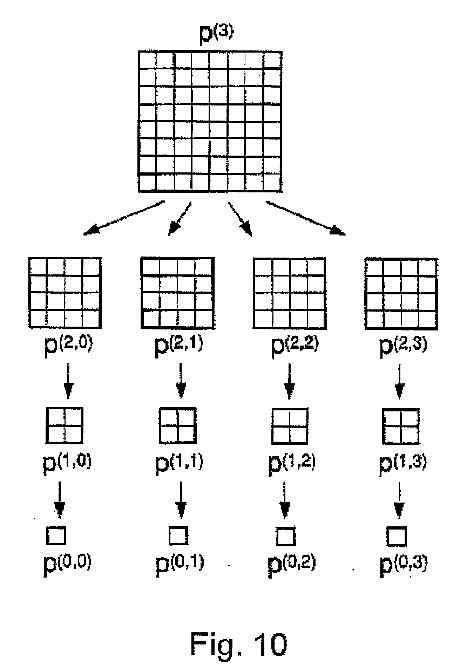

Fig. 10 is a diagram showing source hierarchical images generated in the embodiment in the base technology.

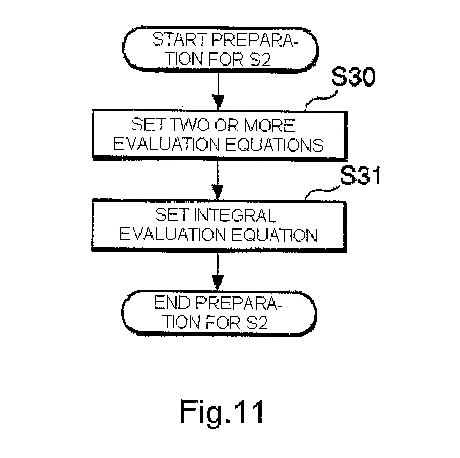

Fig. 11 is a flowchart of a preparation procedure for S2 in Fig. 6.

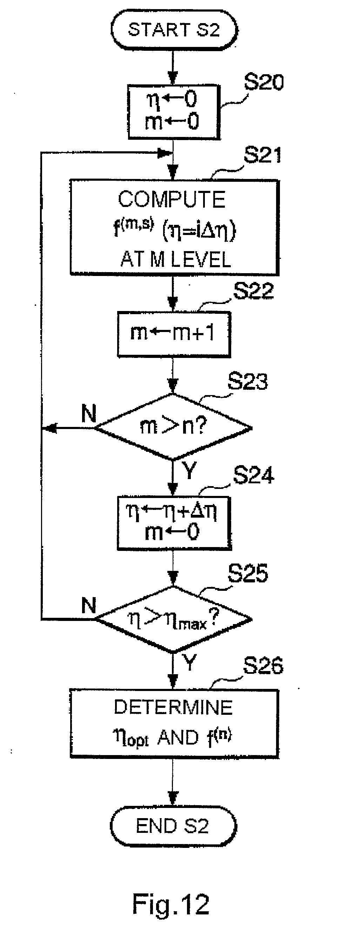

Fig. 12 is a flowchart showing the details of the process at S2 in Fig. 6.

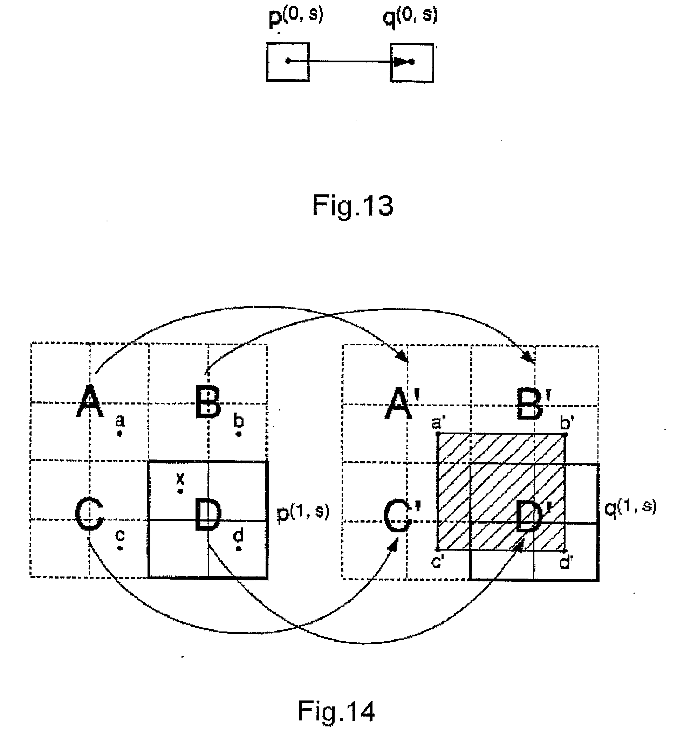

Fig. 13 is a diagram showing the way a submapping is determined at the 0-th level.

Fig. 14 is a diagram showing the way a submapping is determined at the first level.

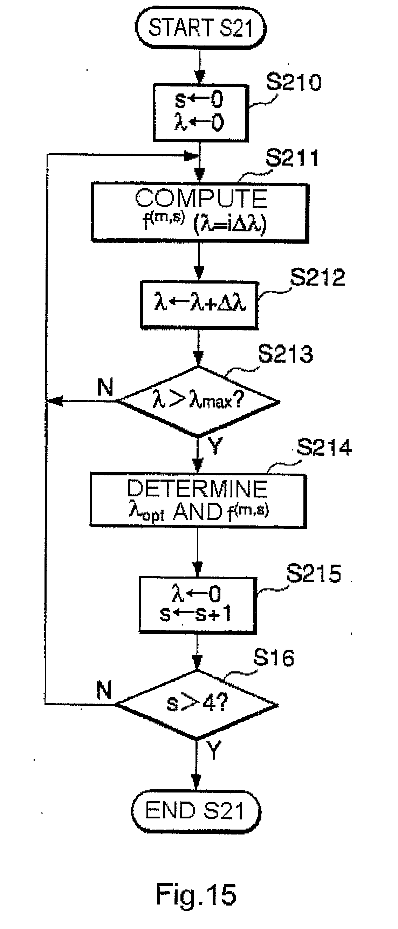

Fig. 15 is a flowchart showing the details of the process at S21 in Fig. 12.

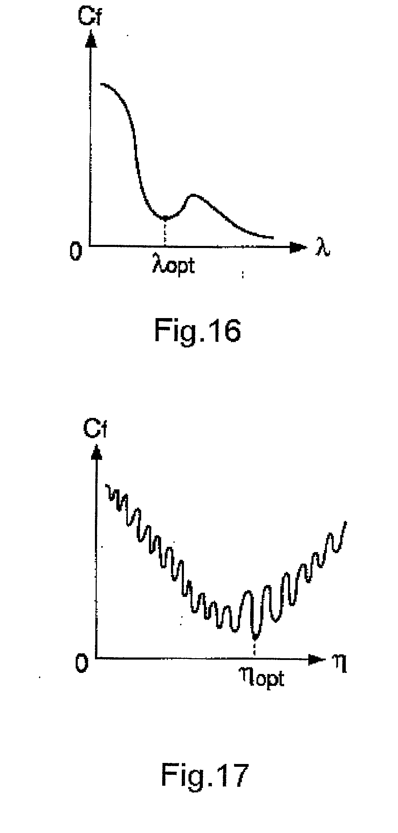

Fig. 16 is a graph showing the behavior of energy $C_f^{(m,s)}$ corresponding to $f^{(m,s)}$ ($\lambda = i\Delta\lambda$) which has been obtained for a certain $f^{(m,s)}$ while varying $\lambda$.

Fig. 17 is a diagram showing the behavior of energy $C_f^{(n)}$ corresponding to $f^{(n)}$ ($\eta = i\Delta\eta$) ($i = 0,1,...$) which has been obtained while varying $\eta$.

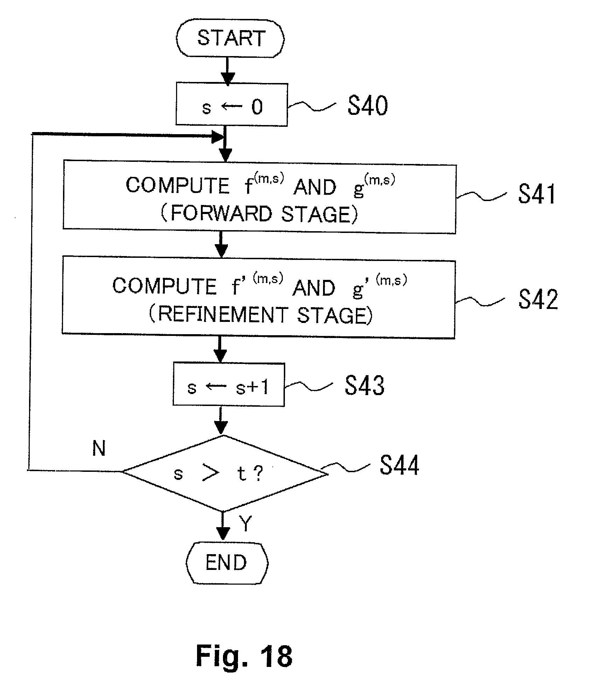

Fig. 18 is a flowchart showing a procedure by which the submapping is obtained at the m-th level in the improved base technology.

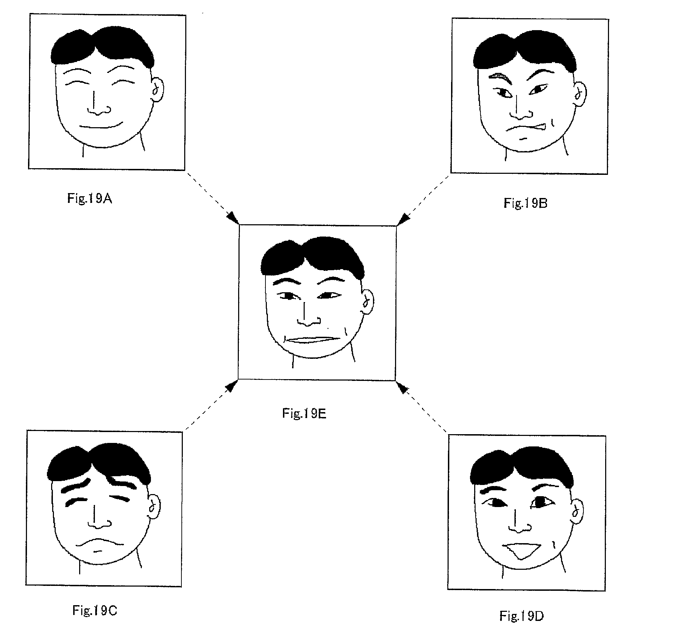

Fig. 19A - Fig. 19E are schematic diagrams showing four key frames (Figs. A, B, C and D) and an intermediate frame (Fig. E) to be generated according to an embodiment of the present invention.

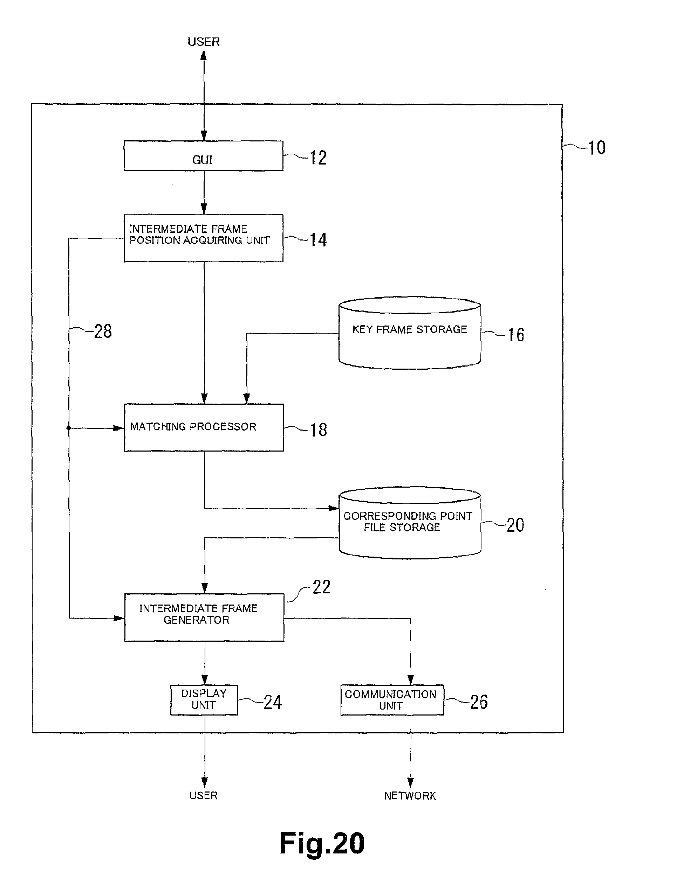

Fig. 20 is a block diagram showing a structure of an image interpolation apparatus according to an embodiment of the present invention.

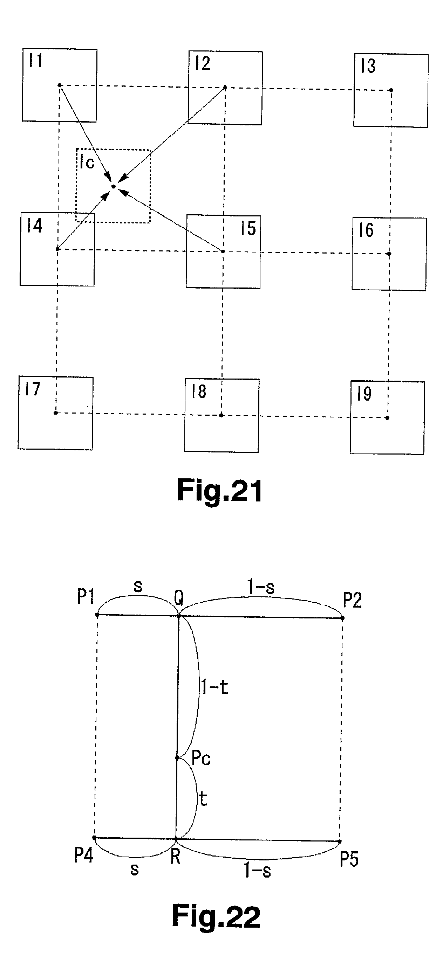

Fig. 21 is a conceptual diagram showing a positional relation of an intermediate frame to be generated and key frames on which the intermediate frame is based, according to an embodiment of the present invention.

Fig. 22 illustrates an interpolation processing method implemented by the image interpolation apparatus according to an embodiment of the present invention.

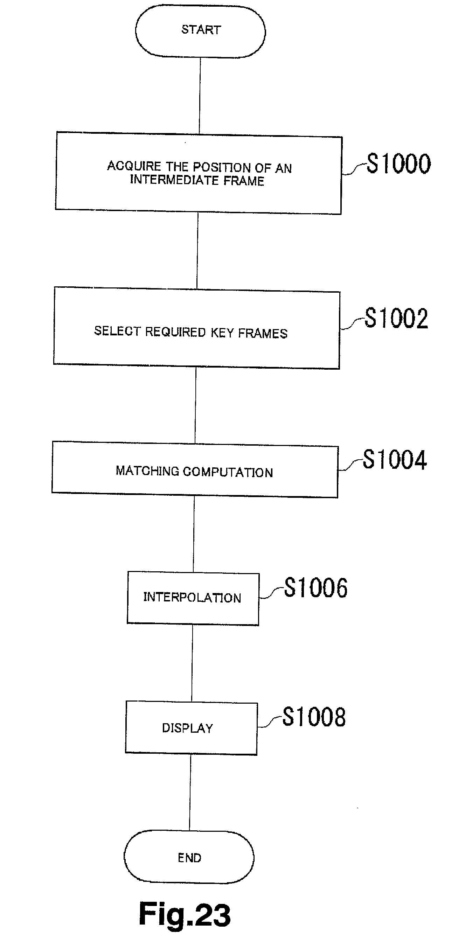

Fig. 23 is a flowchart showing a processing procedure used by the image interpolation apparatus according to the embodiment of the present invention.

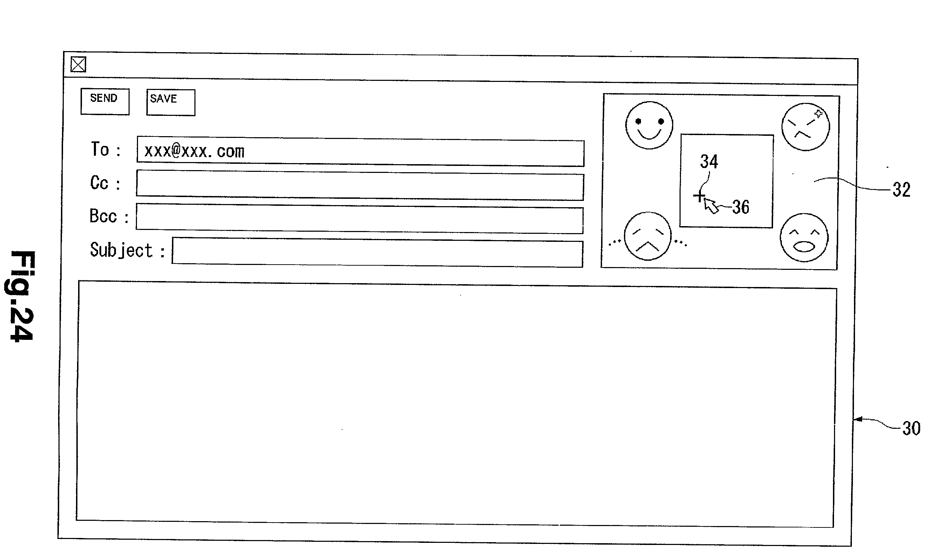

Fig. 24 shows an example of the GUI by which a user specifies an arbitrary facial expression on a New Message screen of electronic mail.

The invention will now be described based on the preferred embodiments, which do not intend to limit the scope of the present invention, but exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections [1], [2] and [3] belong to the base technology, where [1] describes elemental techniques, [2] describes a processing procedure and [3] describes some improvements on [1] and [2]. These techniques are patented under Japanese Patent No. 2927350 and owned by the same assignee of the present invention, and they realize an optimal achievement when combined with the present invention. However, it is to be noted that the image matching techniques which can be adopted in the present embodiments are not limited to this.

In Figs. 19A to 24, image coding and decoding techniques utilizing, in part, the base technology will be described in a specific manner.

**Base Technology**

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, there is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval [0, N] ⊂ R is denoted by I. A pixel of the image at position (i, j) is denoted by $p^{(i,j)}$ where i,j. I.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as $2^m X 2^m$ ($0 \leq m \leq n$). A critical point filter constructs the following four new hierarchical images recursively, in the direction descending from n.

$$p_{(i,j)}^{(m,0)} = \min(\min(p_{(2i,2j)}^{(m+1,0)}, (p_{(2i,2j+1)}^{(m+1,0)}, \min(p_{(2i+1,2j)}^{(m+1,0)}, (p_{(2i+1,2j+1)}^{(m+1,0)}))$$

$$p_{(i,j)}^{(m,1)} = \max(\min(p_{(2i,2j)}^{(m+1,1)}, (p_{(2i,2j+1)}^{(m+1,1)}, \min(p_{(2i+1,2j)}^{(m+1,1)}, (p_{(2i+1,2j+1)}^{(m+1,1)}))$$

$$p_{(i,j)}^{(m,2)} = \min(\max(p_{(2i,2j)}^{(m+1,2)}, (p_{(2i,2j+1)}^{(m+1,2)}, \max(p_{(2i+1,2j)}^{(m+1,2)}, (p_{(2i+1,2j+1)}^{(m+1,2)}))$$

$$p_{(i,j)}^{(m,3)} = \max(\max(p_{(2i,2j)}^{(m+1,3)}, (p_{(2i,2j+1)}^{(m+1,3)}, \max(p_{(2i+1,2j)}^{(m+1,3)}, (p_{(2i+1,2j+1)}^{(m+1,3)})) \tag{1}$$

where let

$$p_{(i,j)}^{(n,0)} = p_{(i,j)}^{(n,1)} = p_{(i,j)}^{(n,2)} = p_{(i,j)}^{(n,3)} = p_{(i,j)} \tag{2}$$

The above four images are referred to as subimages hereinafter. When $\min_{x\,t\,x+1}$ and $\max_{x\,t\,x+1}$ are abbreviated to $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, $\alpha$ (x) $\alpha$ (y) preserves the local minimum point(minima point), $\beta$ (x) $\beta$ (y) preserves the local maximum point(maxima point), $\alpha$ (x) $\beta$ (y) and $\beta$ (x) $\alpha$ (y) preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

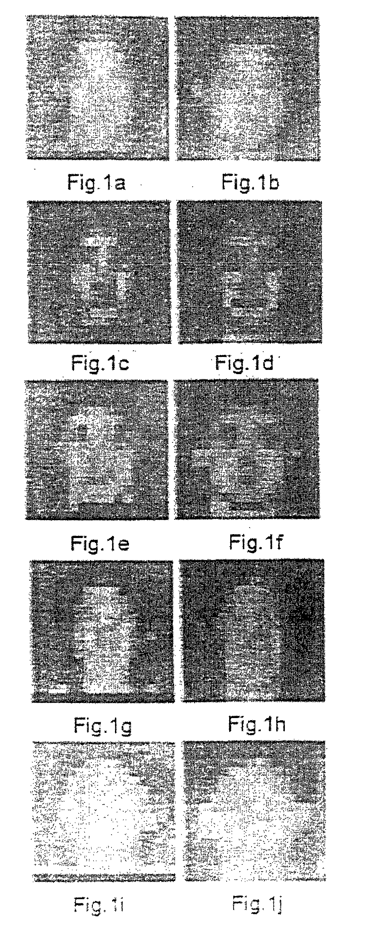

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p^{(n)}_{(i,j)}$ and that of the destination image at (k, l) is denoted by $q^{(n)}_{(k,l)}$ where i, j, k, l $\in$ I. The energy of the mapping between the images (described later) is then defined. This energy is determined by the difference in the intensity of the pixel of the source image and its corresponding pixel of the destination image and the smoothness of the mapping. First, the mapping $f^{(m,0)}:p^{(m,0)} . q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)} : p^{(m,\sigma(i))} \to q^{(m\sigma(i))} \tag{3}$$

where $\sigma(i) \in \{0,1,2,3\}$.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}: I/2^{n-m} \times I/2^{n-m}. I/2^{n-m} \times I/2^{n-m}$ (s = 0,1,...), where $f^{(m,s)}_{(i,j)}=(k,l)$ means that $p^{(m,s)}_{(i,j)}$ of the source image is mapped to $q^{(m,s)}_{(k,l)}$ of the destination image. For simplicity, when f(i,j)=(k,l) holds, a pixel $q^{(k,l)}_{(k,l)}$ is denoted by $q_{f(i,j)}$.

When the data sets are discrete as image pixels (grid points) treated in the base technology, the definition of bijectivity is important. Here, the bijection will be defined in the following manner, where i,i',j,j',k and 1 are all integers. First, each square region (4)

$$p^{(m,s)}_{(i,j)} p^{(m,s)}_{(i+1,j)} p^{(m,s)}_{(i+1,j+1)} p^{(m,s)}_{(i,j+1)} \tag{4}$$

on the source image plane denoted by R is considered, where i = 0, ..., $2^m$-1, and j = 0, ..., $2^m$-1. The edges of R are directed as follows.

$$\overrightarrow{p^{(m,s)}_{(i,j)} p^{(m,s)}_{(i+1,j)}}, \overrightarrow{p^{(m,s)}_{(i+1,j)} p^{(m,s)}_{(i+1j+1)}}, \overrightarrow{p^{(m,s)}_{(i+1,j+1)} p^{(m,s)}_{(i,j+1)}} \text{ and } \overrightarrow{p^{(m,s)}_{(i,j+1)} p^{(m,s)}_{(i,j)}} \tag{5}$$

This square will be mapped by f to a quadrilateral on the destination image plane. The quadrilateral (6)

$$q^{(m,s)}_{(i,j)} q^{(m,s)}_{(i+1,j)} q^{(m,s)}_{(i+1,j+1)} q^{(m,s)}_{(i,j+1)} \tag{6}$$

denoted by $f^{(m,s)}(R)$ should satisfy the following bijectivity conditions(BC).

$$(\text{So, } f^{(m,s)}(R) = f^{(m,s)}(p_{(i,j)}^{(m,s)} p_{(i+1,j)}^{(m,s)} p_{(i+1,j+1)}^{(m,s)} p_{(i,j+1)}^{(m,s)} = q_{(i,j)}^{(m,s)} q_{(i+1,j)}^{(m,s)} q_{(i+1,j+1)}^{(m,s)} q_{(i,j+1)}^{(m,s)})$$

1. The edges of the quadrilateral $f^{(m,s)}(R)$ should not intersect one another.
2. The orientation of the edges of $f^{(m,s)}(R)$ should be the same as that of R (clockwise in the case of Fig. 2).
3. As a relaxed condition, retraction mapping is allowed.

The bijectivity conditions stated above shall be simply referred to as BC hereinafter.

Without a certain type of a relaxed condition, there would be no mappings which completely satisfy the BC other than a trivial identity mapping. Here, the length of a single edge of $f^{(m,s)}(R)$ may be zero. Namely, $f^{(m,s)}(R)$ may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.

In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=2^m-1, j=0, j=2^m-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C_{(i,j)}^{(m,s)}$ of the mapping $f^{(m,s)}$ at (i,j) is determined by the following equation (7).

$$C_{(i,j)}^{(m,s)} = \left| V(p_{(i,j)}^{(m,s)}) - V(q_{f(i,j)}^{(m,s)}) \right|^2 \tag{7}$$

where $V(p_{(i,j)}^{(m,s)})$ and $V(q_{f(i,j)}^{(m,s)})$ are the intensity values of the pixels $p_{(i,j)}^{(m,s)}$ and $q_{f(i,j)}^{(m,s)}$, respectively. The total energy $C^{(m,s)}$ of f is a matching evaluation equation, and can be defined as the sum of $C_{(i,j)}^{(m,s)}$ as shown in the following equation (8).

$$C_f^{(m,s)} = \sum_{i=0}^{i=2^m-1} \sum_{j=0}^{j=2^m-1} C_{(i,j)}^{(m,s)} \qquad --- \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p_{(i,j)}^{(m,s)}$ and $q_{f(i,j)}^{(m,s)}$ (i=0,1,...,2^m-1, j=0,1,...,2^m-1), regardless of the intensity of the pixels. The energy $D_{(i,j)}^{(m,s)}$ of the mapping $f^{(m,s)}$ at a point (i,j) is determined by the following equation (9).

$$D_{(i,j)}^{(m,s)} = \eta E_{0(i,j)}^{(m,s)} + E_{1(i,j)}^{(m,s)} \tag{9}$$

where the coefficient parameter $\eta$ which is equal to or greater than 0 is a real number. And we have

$$E_{0(i,j)}^{(m,s)} = \left\| (i,j) - f^{(m,s)}(i,j) \right\|^2 \tag{10}$$

$$E_{1(i,j)}^{(m,s)} = \sum_{i'=i-1}^{i}\sum_{j'=j-1}^{j}\left\| (f^{(m,s)}(i,j)-(i,j))-(f^{(m,s)}(i',j')-(i',j')) \right\|^2 /4 \quad \text{---} \quad (11)$$

where

$$\|(x,y)\| = \sqrt{x^2 + y^2} \qquad\qquad (12)$$

and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1}\ \sum_{j=0}^{j=2^m-1} D_{(i,j)}^{(m,s)} \qquad\qquad \text{---} \quad (13)$$

[1. 3. 2. 3] Total energy of the mapping

The total energy of the mapping, that is, a combined evaluation equation which relates to the combination of a plurality of evaluations, is defined as $\lambda C_f^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{\lambda C_f^{(m,s)} + D_f^{(m,s)}\} \qquad\qquad \text{---} \quad (14)$$

Care must be exercised in that the mapping becomes an identity mapping if $\lambda=0$ and $\eta=0$ (i.e., $f^{(m,s)}(i,j)=(i,j)$ for all $i=0,1,...,2^m-1$ and $j=0,1,...,2^m-1$). As will be described later, the mapping can be gradually modified or transformed from an identity mapping since the case of $\lambda=0$ and $\eta=0$ is evaluated at the outset in the base technology. If the combined evaluation equation is defined as $C_f^{(m,s)}+\lambda D_f^{(m,s)}$ where the original position of $\lambda$ is changed as such, the equation with $\lambda=0$ and $\eta=0$ will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \quad (15)$$

$p^{(m-1,s)}_{(i',j')}$ and $q^{(m-1,s)}_{(i',j')}$ are respectively called the parents of $p^{(m,s)}_{(i,j)}$ and $q^{(m,s)}_{(i,j)}$, where $\lfloor x \rfloor$ denotes the largest integer not exceeding $x$. Conversely, $p^{(m,s)}_{(i,j)}$ and $q^{(m,s)}_{(i,j)}$ are the child of $p^{(m-1,s)}_{(i',j')}$ and the child of $q^{(m-1,s)}_{(i',j')}$, respectively. A function parent(i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p^{(m,s)}_{(i,j)}$ and $q^{(m,s)}_{(k,l)}$ is determined by computing the energy and finding the minimum thereof. The value of $f^{(m,s)}(i,j)=(k,l)$ is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g^{(m,s)}(i-1,j-1)} \, q^{(m,s)}_{g^{(m,s)}(i-1,j+1)} \, q^{(m,s)}_{g^{(m,s)}(i+1,j+1)} \, q^{(m,s)}_{g^{(m,s)}(i+1,j-1)} \tag{17}$$

where

$$g^{(m,s)}(i,j) = f^{(m-1,s)}(parent(i,j)) + f^{(m-1,s)}(parent(i,j) + (1,1)) \tag{18}$$

The quadrilateral defined above is hereinafter referred to as the inherited quadrilateral of $p^{(m,s)}_{(i,j)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel $q^{(m,s)}_{(i,j)}$ which exists inside the inherited quadrilateral A'B'C'D'. Thereby, bridging from the mapping at the (m-1)th level to the mapping at the m-th level is achieved.

The energy $E_0$ defined above is now replaced by the following (19) and (20)

$$E_{0(i,j)} = \|f^{(m,0)}(i,j) - g^{(m)}(i,j)\|^2 \tag{19}$$

$$E_{0(i,j)} = \|f^{(m,s)}(i,j) - g^{(m,s-1)}(i,j)\|^2, (1 \le i) \tag{20}$$

for computing the submapping $f^{(m,0)}$ and the submapping $f^{(m,s)}$ at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between $f^{(m,s)}(i,j)$ and the location where (i,j) should be mapped when regarded as a part of a pixel at the (m-1)the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of $f^{(m,s)}(i,j)$. L is increased until such a pixel is found or L reaches its upper bound $L^{(m)}_{max}$. $L^{(m)}_{max}$ is fixed for each level m. If no such a pixel is found at all, the third condition of the BC is ignored temporarily and such mappings that caused the area of the transformed quadrilateral to become zero (a point or a line) will be permitted so as to determine $f^{(m,s)}(i,j)$. If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C_f^{(m,s)}$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D_f^{(m,s)}$ in the equation 14 tends to increase abruptly.
4. As a result, since the value of the equation 14 tends to increase abruptly, $f^{(m,s)}$ changes in order to suppress the abrupt increase of $D_f^{(m,s)}$. As a result, $C_f^{(m,s)}$ increases.

Therefore, a threshold value at which $C_f^{(m,s)}$ turns to an increase from a decrease is detected while a state in which the equation (14) takes the minimum value with $\lambda$ being increased is kept. Such $\lambda$ is determined as the optimal value at $\eta=0$. Then, the behavior of $C_f^{(m,s)}$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C_f^{(m,s)} + D_f^{(m,s)}$. $D_{(i,j)}^{(m,s)}$ in the equation (9) represents the smoothness and theoretically becomes minimum when it is the identity mapping. $E_0$ and $E_1$ increase as the mapping is further distorted. Since $E_1$ is an integer, 1 is the smallest step of $D_f^{(m,s)}$. Thus, that changing the mapping reduces the total energy is impossible unless a changed amount (reduction amount) of the current $\lambda C_{(i,j)}^{(m,s)}$ is equal to or greater than 1. Since $D_f^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as $\lambda$ increases. The histogram of $C_{(i,j)}^{(m,s)}$ is denoted as h(l), where h(l) is the number of pixels whose energy $C_{(i,j)}^{(m,s)}$ is $l^2$. In order that $\lambda l^2 \geq 1$, for example, the case of $l^2=1/\lambda$ is considered. When $\lambda$ varies from $\lambda_1$ to $\lambda_2$, a number of pixels (denoted A) expressed by the following (21)

$$A = \sum_{l=\left\lceil \frac{1}{\lambda_2} \right\rceil}^{\left\lfloor \frac{1}{\lambda_1} \right\rfloor} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2} \frac{h(l)}{\lambda^{3/2}}d\lambda \qquad --- \ (21)$$

changes to a more stable state having the energy (22) which is

$$C^{(m,s)}_f - l^2 = C^{(m,s)}_f - \frac{1}{\lambda}.$$ (22)

Here, it is assumed that all the energy of these pixels is approximated to be zero. It means that the value of $C^{(m,s)}_{(i,j)}$ changes by (23).

$$\partial C^{(m,s)}_f = -\frac{A}{\lambda}$$ (23)

As a result, the equation (24) holds.

$$\frac{\partial C^{(m,s)}_f}{\partial \lambda} = \frac{h(l)}{\lambda^{5/2}}$$ (24)

Since h(1)>0 , $C^{(m,s)}_f$ decreases in normal case. However, when $\lambda$ tends to exceed the optimal value, the above phenomenon that is characterized by the increase in $C^{(m,s)}_f$ occurs. The optimal value of $\lambda$ is determined by detecting this phenomenon.
When

$$h(l)=Hl^k=\frac{H}{\lambda^{5/2}}$$ (25)

is assumed where both H(h>0) and k are constants, the equation (26) holds.

$$\frac{\partial C^{(m,s)}_f}{\partial \lambda} = \frac{H}{\lambda^{5/2+k/2}}$$ (26)

Then, if k≠-3, the following (27) holds.

$$C^{(m,s)}_f = C + \frac{H}{(3/2+k/2)\lambda^{5/2+k/2}}$$ (27)

The equation (27) is a general equation of $C^{(m,s)}_f$ (where C is a constant).
When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}}$$ (28)

holds, the number of pixels violating the BC increases at a rate of the equation (29).

$$B_0 = \frac{h(l)P_0}{\lambda^{3/2}}$$ (29)

Thus,

$$\frac{B_0\lambda^{3/2}}{P_0 h(l)} = 1$$ (30)

is a constant. If assumed that h(l)=Hl^k, the following (31), for example,

$$B_0 \lambda^{3/2+k/2} = p_0 H \qquad (31)$$

becomes a constant. However, when $\lambda$ exceeds the optimal value, the above value of (31) increases abruptly. By detecting this phenomenon, whether or not the value of $B_0 \lambda^{3/2+k/2}/2^m$ exceeds an abnormal value $B_{0thres}$ exceeds is inspected, so that the optimal value of can be determined. Similarly, whether or not the value of $B_1 \lambda^{3/2+k/2}/2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda > 0.1$, and it is difficult to obtain a correct result when $\lambda > 0.1$.

[1. 4. 2] Histogram h(l)

The examination of $C_f^{(m,s)}$ does not depend on the histogram h(l). The examination of the BC and its third condition may be affected by the h(l). k is usually close to 1 when ($\lambda$, $C_f^{(m,s)}$ is actually plotted. In the experiment, k=1 is used, that is, $B_0 \lambda^2$ and $B_1 \lambda^2$ are examined. If the true value of k is less than 1, $B_0 \lambda^2$ and $B_1 \lambda^2$ does not become constants and increase gradually by the factor of $\lambda^{(1-k)/2}$. If h(l) is a constant, the factor is, for example, $\lambda^{1/2}$. However, such a difference can be absorbed by setting the threshold $B_{0thres}$ appropriately.

Let us model the source image by a circular object with its center at$(x_0,y_0)$ and its radius r, given by:

$$p(i, j) = \begin{cases} \dfrac{255}{r} c(\sqrt{(i-x_0)^2 + (j-y_0)^2}) \dots (\sqrt{(i-x_0)^2 + (j-y_0)^2} \leq r) \\ 0 \dots (otherwise) \end{cases}$$

$$--- (32)$$

and the destination image given by:

$$q(i, j) = \begin{cases} \dfrac{255}{r} c(\sqrt{(i-x_1)^2 + (j-y_1)^2}) \dots (\sqrt{(i-x_1)^2 + (j-y_1)^2} \leq r) \\ 0 \dots (otherwise) \end{cases}$$

$$--- (33)$$

with its center at$(x_1,y_1)$ and radius r. Let c(x) has the form of $c(x)=x^k$. When the centers $(x_0,y_0)$ and $(x_1,y_1)$ are sufficiently far from each other, the histogram h(l) is then in the form of:

$$h(l) \propto rl^k (k \neq 0) \qquad (34)$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \leq k \leq 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

### [1. 4. 3] Dynamic determination of η

The parameter η can also be automatically determined in the same manner. Initially, η is set to zero, and the final mapping $f^{(n)}$ and the energy $C_f^{(n)}$ at the finest resolution are computed. Then, after η is increased by a certain value $\Delta\eta$ and the final mapping $f^{(n)}$ and the energy $C_f^{(n)}$ at the finest resolution are again computed. This process is repeated until the optimal value is obtained. η represents the stiffness of the mapping because it is a weight of the following equation (35).

$$E_{0(i,j)}^{(m,s)} = \|f^{(m,s)}(i,j) - f^{(m,s-1)}(i,j)\|^2 \tag{35}$$

When η is zero, $D_f^{(n)}$ is determined irrespective of the previous submapping, and the present submapping would be elastically deformed and become too distorted. On the other hand, when η is a very large value, $D_f^{(n)}$ is almost completely determined by the immediately previous submapping. The submappings are then very stiff, and the pixels are mapped to almost the same locations. The resulting mapping is therefore the identity mapping. When the value of η increases from 0, $C_f^{(n)}$ gradually decreases as will be described later. However, when the value of η exceeds the optimal value, the energy starts increasing as shown in Fig. 4. In Fig. 4, the x-axis represents η , and y-axis represents $C_f$.

The optimum value of η which minimizes $C_f^{(n)}$ can be obtained in this manner. However, since various elements affects the computation compared to the case of $\lambda$, $C_f^{(n)}$ changes while slightly fluctuating. This difference is caused because a submapping is re-computed once in the case of $\lambda$ whenever an input changes slightly, whereas all the submappings must be re-computed in the case of η. Thus, whether the obtained value of $C_f^{(n)}$ is the minimum or not cannot be judged instantly. When candidates for the minimum value are found, the true minimum needs to be searched by setting up further finer interval.

### [1. 5] Supersampling

When deciding the correspondence between the pixels, the range of $f^{(m,s)}$ can be expanded to R X R (R being the set of real numbers) in order to increase the degree of freedom. In this case, the intensity of the pixels of the destination image is interpolated, so that $f^{(m,s)}$ having the intensity at non-integer points

$$V(q_{f^{(m,s)}(i,j)}^{(m,s)}) \tag{36}$$

is provided. Namely, supersampling is performed. In its actual implementation, $f^{(m,s)}$ is allowed to take integer and half integer values, and

$$V(q_{(i,j)+(0.5,0.5)}^{(m,s)}) \tag{37}$$

is given by

$$V(q_{(i,j)}^{(m,s)}) + V(q_{(i,j)+(1,1)}^{(m,s)})/2 \tag{38}$$

### [1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat's face is computed. The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of $f^{(m,s)}$ is determined at the top leftmost pixel (i,j)=(0,0). The value of each $f^{(m,s)}$(i, j) is then determined while i is increased by one at each step. When i reaches the width of the image, j is increased by one and i is reset to zero. Thereafter, $f^{(m,s)}$(i,j) is determined while scanning the source image. Once pixel correspondence is determined for all the points, it means that a single mapping $f^{(m,s)}$ is determined.

When a corresponding point $q_{f(i,j)}$ is determined for $p_{(i,j)}$, a corresponding point $q_{f(i,j+1)}$ of $p_{(i,j+1)}$ is determined next. The position of $q_{f(i,j+1)}$ is constrained by the position of $q_{f(i,j)}$ since the position of $q_{f(i,j+1)}$ satisfies the BC. Thus, in this system, a point whose corresponding point is determined earlier is given higher priority. If the situation continues in which (0,0) is always given the highest priority, the final mapping might be unnecessarily biased. In order to avoid this bias, $f^{(m,s)}$ is determined in the following manner in the base technology.

First, when (s mod 4) is 0, $f^{(m,s)}$ is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, $f^{(m,s)}$ is computed continuously in two directions on the assumption that s=0 and s=2.

In the actual implementation, the values of $f^{(m,s)}$(i,j) (m=0,...,n) that satisfy the BC are chosen as much as possible, from the candidates (k,l) by awarding a penalty to the candidates violating the BC. The energy $D_{(k,l)}$ of the candidate that violates the third condition of the BC is multiplied by $\phi$ and that of a candidate that violates the first or second condition of the BC is multiplied by $\psi$. In the actual implementation, $\phi=2$ and $\psi=100000$ are used.

In order to check the above-mentioned BC, the following test is performed as the actual procedure when determining (k,l)=$f^{(m,s)}$(i,j). Namely, for each grid point (k,l) in the inherited quadrilateral of $f^{(m,s)}$(i,j), whether or not the z-component of the outer product of

$$W=\vec{A}\times\vec{B} \tag{39}$$

is equal to or greater than 0 is examined, where

$$\vec{A} = \overrightarrow{q^{(m,s)}_{f^{(m,s)}(i,j-1)} \, q^{(m,s)}_{f^{(m,s)}(i+1,j-1)}} \tag{40}$$

$$\vec{B} = \overrightarrow{q^{(m,s)}_{f^{(m,s)}(i,j-1)} \, q^{(m,s)}_{(k,l)}} \tag{41}$$

Here, the vectors are regarded as 3D vectors and the z-axis is defined in the orthogonal right-hand coordinate system. When W is negative, the candidate is awarded a penalty by multiplying $D^{(m,s)}_{(k,l)}$ by $\Psi$ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}$(i,j+1) for the adjacent pixel at (i,j+1), there is no pixel on the source image plane that satisfies the BC if the z-component of W is negative because then $q^{(m,s)}_{(k,l)}$ passes the boundary of the adjacent quadrilateral.

[1. 7. 1] The order of submappings

In the actual implementation, $\sigma(0)=0$, $\sigma(1)=1$, $\sigma(2)=2$, $\sigma(3)=3$, $\sigma(4)=0$ were used when the resolution level was even, while (0)=3, $\sigma$ (1)=2, $\sigma$ (2)=1, $\sigma$ (3)=0, $\sigma$ (4)=3 were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square $p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+2,j+1)}q_{f(i,j+1)}$ on the destination image plane. For simplicity, the distance between the image planes is assumed 1. The intermediate image pixels r(x,y,t) ($0 \leqq x \leqq$ N-1, $0 \leqq y \leqq$ M - 1) whose distance from the source image plane is t ($0 \leqq t \leqq 1$) are obtained as follows. First, the location of the pixel r(x,y,t), where x,y,t $\in$ R, is determined by the equation (42).

$$
\begin{aligned}
(x, y) = &(1 - dx)(1 - dy)(1 - t)(i, j) + (1 - dx)(1 - dy)tf(i, j) \\
&+ dx(1 - dy)(1 - t)(i + 1, j) + dx(1 - dy)tf(i + 1, j) \\
&+ (1 - dx)dy(1 - t)(i, j + 1) + (1 - dx)dytf(i, j + 1) \quad \text{---} \quad (42) \\
&+ dxdy(1 - t)(i + 1, j + 1) + dxdytf(i + 1, j + 1)
\end{aligned}
$$

The value of the pixel intensity at r(x,y,t) is then determined by the equation (43).

$$
\begin{aligned}
V(r(x,y,t)) = &(1-dx)(1-dy)(1-t)V(p_{(i,j)}) + (1-dx)(1-dy)tV(q_{f(i,j)}) \\
&+dx(1-dy)(1-t)V(p_{(i+1,j)}) + dx(1-dy)tV(q_{f(i+1,j)}) \\
&+(1-dx)dy(1-t)V(p_{(i,j+1)}) + (1-dx)dytV(q_{f(i,j+1)}) \\
&+dxdy(1-t)V(p_{(i+1,j+1)}) + dxdytV(q_{f(i+1,j+1)})
\end{aligned} \tag{43}
$$

where dx and dy are parameters varying from 0 to 1.

[1. 9] Mapping on which constraints are imposed

So far, the determination of the mapping to which no constraint is imposed has been described. However, when a correspondence between particular pixels of the source and destination images is provided in a predetermined manner, the mapping can be determined using such correspondence as a constraint.
The basic idea is that the source image is roughly deformed by an approximate mapping which maps the specified pixels of the source image to the specified pixels of the destination images and thereafter a mapping f is accurately computed.
First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.
The approximate mapping F is determined in the following manner. First, the mapping for several pixels are specified. When $n_s$ pixels

$$
p(i_0, j_0), \, p(i_1, j_1), ..., \, p(i_{n_{s-1}}, j_{n_{s-1}}) \tag{44}
$$

of the source image are specified, the following values in the equation (45) are determined.

$$
F^{(n)}(i_0, j_0) = (k_0, l_0),
$$

$$
F^{(n)}(i_1, j_1) = (k_1, l_1), ..., \tag{45}
$$

$$
F^{(n)}(i_{n_{s-1}}, j_{n_{s-1}}) = (k_{n_{s-1}}, l_{n_{s-1}})
$$

For the remaining pixels of the source image, the amount of displacement is the weighted average of the

displacement of $p(i_h, j_h)$ ($h=0,..., n_s -1$). Namely, a pixel $p_{(i,j)}$ is mapped to the following pixel (expressed by the equation (46)) of the destination image.

$$F^{(m)}(i, j) = \frac{(i, j) + \sum_{h=0}^{h=n_s-1}(k_h - i_h, l_h - j_h)weight_h(i, j)}{2^{n-m}} \quad --- \quad (46)$$

where

$$weight_h(i, j) = \frac{1/\|(i_h\text{-}i, j_h\text{-}j)\|^2}{total\_weight(i,j)} \quad\quad (47)$$

where

$$total\_weight(i, j) = \sum_{h=0}^{h=n_s-1} 1/\|(i_h - i, j_h - j)\|^2 \quad --- \quad (48)$$

Second, the energy $D^{(m,s)}$ of the candidate mapping f is changed so that mapping f similar to $F^{(m)}$ has a lower energy. Precisely speaking, $D^{(m,s)}_{(i,j)}$ is expressed by the equation (49).

$$D^{(m,s)}_{(i,j)} - E^{(m,s)}_{0_{(i,j)}} + \eta E^{(m,s)}_{1_{(i,j)}} + \kappa E^{(m,s)}_{2_{(i,j)}} \quad\quad (49)$$

$$E^{(m.s)}_{2_{(i,j)}} = \begin{cases} 0, & if \left\|F^{(m)}(i, j) - f^{(m,s)}(i, j)\right\|^2 \leq \left\lfloor \dfrac{\rho^2}{2^{2(n-m)}} \right\rfloor \\[2em] \left\|F^{(m)}(i, j) - f^{(m,s)}(i, j)\right\|^2, & otherwise \end{cases} \quad --- \quad (50)$$

where $\kappa$, $\rho \geqq 0$. Finally, the mapping f is completely determined by the above-described automatic computing process of mappings.

Note that $E^{(m,s)}_{2_{(i,j)}}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \quad --- \quad (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.
Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n X 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images p(m, 0) through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} X 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C_f^{(m,s)}$ concerning a pixel value, introduced in [1.3.2.1], and the energy $D_f^{(m,s)}$ concerning the smoothness of the mapping introduced in [1.3.2.2]. Next, by combining these evaluation equations, a combined evaluation equation is set (S31). Such the combined evaluation equation includes $\lambda C_{(i,j)}^{(m,s)} + D_f^{(m,s)}$. Using $\eta$ introduced in [1.3.2.2], we have

$$\sum \sum (\lambda C_{(i,j)}^{(m,s)} + \eta E_{0(i,j)}^{(m,s)} + E_{1(i,j)}^{(m,s)}) \quad --- \ (52)$$

In the equation (52) the sum is taken for each i and j where i and j run through 0, 1, ... , $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter $\eta$ and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

1. An upper left point a, an upper right point b, a lower left point c and a lower right point d with respect to the point x are obtained at the first level of resolution.

2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.

3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.

4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.

5. The corresponding points b' to d' are plotted by using the same method as the above 4 so as to produce an inherited quadrilateral defined by the points a' to d'.

6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta = 0)$ because it has been determined relative to $\eta = 0$.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$ (S25), the process returns to S21 and the mapping $f^{(n)}(\eta = \Delta\eta)$ relative to the new $\eta$ is obtained. This process is repeated while obtaining $f^{(n)}(\eta = i\Delta\eta)$ ($i$=0,1,...) at S21. When $\eta$ exceeds $\eta_{max}$, the process proceeds to S26 and the optimal $\eta = \eta_{opt}$ is determined using a method described later, so as to let $f^{(n)}(\eta = \eta_{opt})$ be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping $f^{(m,s)}$ that minimizes the energy with respect to the then $\lambda$ (and, implicitly, $\eta$) (S211), and the thus obtained is denoted as $f^{(m,s)}(\lambda =$

0). In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ ($\lambda = \Delta\lambda$) relative to the new $\lambda$ is obtained. This process is repeated while obtaining $f^{(m,s)}$ ($\lambda = i\Delta\lambda$)($i$=0,1,...). When $\lambda$ exceeds $\lambda_{max}$, the process proceeds to S214 and the optimal $\lambda = \lambda_{opt}$ is determined , so as to let $f^{(n)}(\lambda = \lambda_{opt})$ be the final mapping $f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m,0)}$ is renewed utilizing $f^{(m,3)}$ as described above and a submapping at that level is determined.

Fig. 16 shows the behavior of the energy $C_f^{(m,s)}$ corresponding to $f^{(m,s)}$ ($\lambda = i\Delta\lambda$)($i$ = 0,1,...) for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda$ opt. As observed in Fig. 16, even if $C_f^{(m,s)}$ turns to decrease again in the range $\lambda > \lambda_{opt}$, the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}$ ($\eta = i\Delta\eta$)($i$=0,1,...) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot} = \alpha E_0 + E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$ , two parameters such as $\eta$ and $\lambda$. in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0 + \beta E_1$, for instance, may be taken up as the combined evaluation equation, where $\alpha + \beta = 1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

[3] Improvements in the base technology

The base technology above may also be further refined or improved to yield more precise matching. Some improvements are hereinafter described.

[3.1] Critical point filters and subimages considering color information

The critical point filters of the base technology may be revised to make effective use of the color information in the images. First, a color space is introduced using HIS (hue, intensity, saturation), which is considered to be closest to human intuition. However, a formula for intensity "Y" which is considered closest to human visual. sensitivity is used instead of "I", for the transformation of color into intensity.

$$H = \frac{\dfrac{\pi}{2} - \tan^{-1}\left(\dfrac{2R - G - R}{\sqrt{3(G - B)}}\right)}{2\pi}$$

$$I = \frac{R+G+B}{3}$$

$$S = 1 - \frac{\min(R,G,B)}{3}$$

$$Y = 0.299 \times R + 0.587 \times G + 0.114 \times B \tag{53}$$

Here, the following definitions are made, in which the intensity Y and the saturation S at a pixel "a" are respectively denoted by Y(a) and S(a).

$$\alpha_Y(a,b) = \begin{cases} a \cdots (Y(a) \le Y(b)) \\ b \cdots (Y(a) > Y(b)) \end{cases}$$

$$\beta_Y(a,b) = \begin{cases} a \cdots (Y(a) \ge Y(b)) \\ b \cdots (Y(a) < Y(b)) \end{cases}$$

$$\beta_S(a,b) = \begin{cases} a \cdots (S(a) \ge S(b)) \\ b \cdots (S(a) < S(b)) \end{cases}$$

$$--- \quad (54)$$

The following five filters are then prepared based on the definition described above.

$$p_{(i,j)}^{(m,0)} = \beta_\gamma(\beta_\gamma(p_{(2i,2j)}^{(m+1,0)}, p_{(2i,2j+1)}^{(m+1,0)}), \beta_\gamma(p_{(2i+1,2j)}^{(m+1,0)}, p_{(2i+1,2j+1)}^{(m+1,0)}))$$

$$p_{(i,j)}^{(m,1)} = \alpha_\gamma(\beta_\gamma(p_{(2i,2j)}^{(m+1,1)}, p_{(2i,2j+1)}^{(m+1,1)}), \beta_\gamma(p_{(2i+1,2j)}^{(m+1,1)}, p_{(2i+1,2j+1)}^{(m+1,1)}))$$

$$p_{(i,j)}^{(m,2)} = \beta_\gamma(\alpha_\gamma(p_{(2i,2j)}^{(m+1,2)}, p_{(2i,2j+1)}^{(m+1,2)}), \alpha_\gamma(p_{(2i+1,2j)}^{(m+1,2)}, p_{(2i+1,2j+1)}^{(m+1,2)})),$$

$$p_{(i,j)}^{(m,3)} = \alpha_\gamma(\alpha_\gamma(p_{(2i,2j)}^{(m+1,3)}, p_{(2i,2j+1)}^{(m+1,3)}), \alpha_\gamma(p_{(2i+1,2j)}^{(m+1,3)}, p_{(2i+1,2j+1)}^{(m+1,3)}))$$

$$p_{(i,j)}^{(m,4)} = \beta_S(\beta_S(p_{(2i,2j)}^{(m+1,4)}, p_{(2i,2j+1)}^{(m+1,4)}), \beta_S(p_{(2i+1,2j)}^{(m+1,4)}, p_{(2i+1,2j+1)}^{(m+1,4)})) \tag{55}$$

The top four filters in (55) are almost the same as those in the base technology, and accordingly, critical points of intensity are preserved with color information. The last filter preserves critical points of saturation, also together with the color information.

At each level of resolution, five types of subimage are generated by these filters. Note that the subimages at the highest level are consistent with the original image.

$$p_{(i,j)}^{(n,0)} = p_{(i,j)}^{(n,1)} = p_{(i,j)}^{(n,2)} = p_{(i,j)}^{(n,3)} = p_{(i,j)}^{(n,4)} = p_{(i,j)} \tag{56}$$

[3.2] Edge images and subimages

An edge detection filter using the first order derivative is further introduced to incorporate information related to edges for matching. This filter can be obtained by convolution integral with a given operator G. The following 2 filters related to horizontal and vertical derivative for an image at n-th level are described as follows:

$$p_{(i,j)}^{(n,h)} = Y(p_{(i,j)}) \otimes G_h$$

$$p_{(i,j)}^{(n,v)} = Y(p_{(i,j)}) \otimes G_v \tag{57}$$

Although G may be a typical operator used for edge detection in image analysis, the following was used in consideration of the computing speed, in this improved technology.

$$G_h = \frac{1}{4}\begin{bmatrix} 1 & 0 & -1 \\ 2 & 0 & -2 \\ 1 & 0 & -1 \end{bmatrix}$$

$$G_v = \frac{1}{4}\begin{bmatrix} 1 & 2 & 1 \\ 0 & 0 & 0 \\ -1 & -2 & -1 \end{bmatrix} \quad --- \tag{58}$$

Next, the image is transformed into the multiresolution hierarchy. Because the image generated by the edge detection filter has an intensity with a center value of 0, the most suitable subimages are the mean value images as follows:

$$p_{(i,j)}^{(m,h)} = \frac{1}{4}(p_{(2i,2j)}^{(m+1,h)} + p_{(2i,2j+1)}^{(m+1,h)} + p_{(2i+1,2j)}^{(m+1,h)} + p_{(2i+1,2j+1)}^{(m+1,h)})$$

$$p_{(i,j)}^{(m,v)} = \frac{1}{4}(p_{(2i,2j)}^{(m+1,v)} + p_{(2i,2j+1)}^{(m+1,v)} + p_{(2i+1,2j)}^{(m+1,v)} + p_{(2i+1,2j+1)}^{(m+1,v)})$$

$$--- \quad (59)$$

The images described in equation (59) are introduced to the energy concerning the edge difference in the energy function for computation during the "forward stage", the stage in which an initial submapping is derived, as will hereinafter be described in more detail.

The magnitude of the edge, i.e., the absolute value is also necessary for the calculation. It is denoted as follows:

$$p_{(i,j)}^{(n,e)} = \sqrt{(p_{(i,j)}^{(n,h)})^2 + (p_{(i,j)}^{(n,v)})^2} \tag{60}$$

Because this value will always be positive, a maximum value filter can be used for the transformation into the multiresolutional hierarchy.

$$p_{(i,j)}^{(m,e)} = \beta_Y(\beta_Y(p_{(2i,2j)}^{(m+1,e)}, p_{(2i,2j+1)}^{(m+1,e)}), \beta_Y(p_{(2i+1,2j)}^{(m+1,e)}, p_{(2i+1,2j+1)}^{(m+1,e)})) \tag{61}$$

The image described in equation (61) is introduced in the course of determining the order of the calculation in the "forward stage" described below.

[3.3] Computing procedures

The computing proceeds in order from the subimages with the coarsest resolution. The calculations are performed more than once at each level of the resolution due to the five types of subimages. This is referred to as a "turn", and the maximum number of turns is denoted by t. Each turn includes energy minimization calculations both in a "forward stage" mentioned above, and in a "refinement stage", that is, a stage in which the submapping is recomputed based on the result of the forward stage. Fig. 18 shows a flowchart related to the improved technology illustrating the computation of the submapping at the m-th level.

As shown in the figure, s is set to zero (S40) initially. Then the mapping f(m,s) of the source image to the destination image, and the mapping g(m,s) of the destination image to the source image are respectively computed by energy minimization in the forward stage (S41). The computation for f(m,s) is hereinafter described. The energy minimized in this improvement technology is the sum of the energy C, concerning the value of the corresponding pixels, and the energy D, concerning the smoothness of the mapping.

$$\min_f (C^f(i,j) + D^f(i,j)) \qquad --- \quad (62)$$

In this improved technology, the energy C includes the energy $C_I$ concerning the intensity difference, which is the same as the energy C in the base technology described in sections [1] and [2] above, the energy $C_C$ concerning the hue and the saturation, and the energy $C_E$ concerning the edge difference. These energies are described as follows:

$$C_I^f(i,j) = |Y(p_{(i,j)}^{(m,s)}) - Y(q_{f(i,j)}^{(m,s)})|^2$$

$$C_C^f(i,j) = \left|S(p_{(i,j)}^{(m,s)})\cos(2\pi H(p_{(i,j)}^{(m,s)})) - S(q_{f(i,j)}^{(m,s)})\cos(2\pi H(q_{f(i,j)}^{(m,s)}))\right|^2$$

$$+ \left|S(p_{(i,j)}^{(m,s)})\sin(2\pi H(p_{(i,j)}^{(m,s)})) - S(q_{f(i,j)}^{(m,s)})\sin(2\pi H(q_{f(i,j)}^{(m,s)}))\right|^2$$

$$C_E^f(i,j) = \left| p_{(i,j)}^{(m,h)} - q_{f(i,j)}^{(m,h)} \right|^2 + \left| p_{(i,j)}^{(m,v)} - q_{f(i,j)}^{(m,v)} \right|^2$$

$$C^f(i,j) = \lambda C_I^f(i,j) + \Psi C_C^f(i,j) + \theta C_E^f(i,j) \tag{63}$$

The parameters ë, ø, and è are real numbers more than 0, and they have constant values in this improved technology. This constancy was achieved by the refinement stage introduced in this technology, which leads to more stable calculation result. Energy $C_E$ is determined from the coordinate (i,j) and the resolution level m, and independent of the type of mapping $f^{(m,s)}$, "s".

The energy D is similar to that in the base technology described above. However, in the base technology, only the adjacent pixels are taken into account when the energy $E_1$, which deals with the smoothness of the images, is derived, whereas, in this improved technology, the number of ambient pixels taken into account can be set as a parameter d.

$$E_0^f(i,j) = \left\| f(i,j) - (i,j) \right\|^2$$

$$E_1^f(i,j) = \sum_{i'=i-d}^{i+d} \sum_{j'=j-d}^{j+d} \left\| (f(i,j) - (i,j)) - (f(i',j') - (i',j')) \right\|^2 \quad --- \quad (64)$$

In preparation for the refinement stage, the mapping $g^{(m,s)}$ of the destination image q to the source image p is also computed in the forward stage.

In the refinement stage (S42), a more appropriate mapping $f^{(m,s)}$ is computed based on the bidirectional mappings, $f^{(m,s)}$ and $g^{(m,s)}$, which were previously computed in the forward stage. In this refinement stage, an energy minimization calculation for an energy M is performed. The energy M is the sum of the energy $M_0$, concerning the degree of conformation to the mapping g of the destination image to the source image, and the energy $M_1$, concerning the difference from the initial mapping. Then, obtained is the submapping $f^{(m,s)}$ that minimizes the energy M.

$$M_0^f(i,j) = \left\| g(f(i,j)) - (i,j) \right\|^2$$

$$M_1^f(i,j) = \left\| f'(i,j) - f(i,j) \right\|^2$$

$$M^f(i,j) = M_0^f(i,j) + M_1^f(i,j) \tag{65}$$

The mapping $g'^{(m,s)}$ of the destination image q to the source image p is also computed in the same manner, so as not to distort in order to maintain the symmetry.

Thereafter, s is incremented (S43), and if s does not exceed t (S44), the computation proceeds to the forward stage in the next turn (S41). In so doing, the energy minimization calculation is performed using a substituted $E_0$, which is described as follows:

$$E_0^f(i,j) = \left\| f(i,j) - f'(i,j) \right\|^2 \tag{66}$$

[3.4] Order of mapping calculation

Because the energy concerning the mapping smoothness, $E_1$, is computed using the mappings of the ambient points, the energy depends on whether those points are previously computed or not. Therefore, the total mapping preciseness significantly depends on the point from which the computing starts and the order in which points are processed. In order to overcome this concern, an image having an absolute value of edge (see equation (61)) is introduced. Because the edge generally has a large amount of information, the mapping calculation proceeds from a point at which the absolute value of edge is the largest. This technique about the order of mapping calculation can make the mapping extremely precise, in particular, for binary images and the like.

**Preferred Embodiments for Image Interpolation**

The image interpolation techniques utilizing the above-described base technology will be described here. According to this technology, a plurality of facial images assuming different expressions are inputted in advance and are utilized to produce a facial image showing arbitrary kind of expression. For example, if a plurality of widely differing expressions, such as "joy", "anger", "sadness" and "happiness", are inputted in advance, then there will be a great variety of expressions that can be generated by this technology.

Figs. 19A - 19E are a group of illustrations prepared for outlining the technology according to a preferred embodiment. Fig. 19A, Fig. 19B, Fig. 19C and Fig. 19D are four key frames showing four different facial images of a same person. The key frames are actual images that have been prepared from photographs taken in advance, and a purpose of this embodiment is to generate an intermediate frame, as shown in Fig. 19E, from these key frames. The key frames of Fig. 19A and Fig. 19B form a first pair of images, and the key frames of Fig. 19C and Fig. 19D form a second pair of images. An intended intermediate frame cannot be generated by a single pair but by both of the first pair and the second pair of images. This is because an intermediate frame is generated by interpolation of a plurality of key frames in both the vertical and horizontal directions.

The present embodiment makes it possible to generate an intermediate frame according to user's preference, thus creating a facial image showing a desired expression from a small number of key frames. The facial image thus generated will prove useful as an attachment to electronic mail to convey the user's feelings to the recipient of the mail, or as a photography processing tool or the like for adjusting the facial expression according to user's preference after photographing.

Fig. 20 shows a structure of an image interpolation apparatus 10 according to a preferred embodiment. The image interpolation apparatus 10 includes a GUI (Graphical User Interface) 12 which interacts with a user, an intermediate frame position acquiring unit 14 which acquires position data 28 on an intermediate frame to be generated via the GUI 12, a key frame storage 16 which stores in advance a plurality of key frames with photographed images of different facial expressions, a matching processor 18 which selects from the key frame storage 16 key frames necessary to generate an intermediate frame showing an intermediate facial expression based on the position data 28 and performs a matching computation based on the base technology, a corresponding point file storage 20 which records corresponding point data between key frames obtained as a result thereof as a corresponding point file, and an intermediate frame generator 22 which generates an intermediate frame by interpolation computation using the corresponding point file and the position data 28. This apparatus 10 further includes a display unit 24 which displays a generated intermediate frame on a screen and a communication unit 26 which sends out the intermediate frame as needed.

Fig. 21 shows a positional relationship between spatially dispersed key frames and an intermediate frame. The key frames are arranged in a matrix at predetermined intervals, and the intermediate frame to be generated is positioned among these key frames.

Referring to Fig. 21, provided here are nine key frames that are a first key frame I1 to a ninth key frame I9. Now, if the position of an intermediate frame to be generated is acquired through the GUI 12 as an intermediate frame Ic shown in Fig. 21, then the key frames surrounding the intermediate frame Ic (hereinafter referred to as "marked key frames") will be first identified as the first key frame I1, the second key frame I2, the fourth key frame I4 and the fifth key frame I5. The first key frame I1 and the second key frame I2 becomes a first image pair, and the fourth key frame I4 and the fifth key frame I5 becomes a second image pair. Thereafter, the position to be occupied by the intermediate frame Ic within a quadrilateral formed by these four key frames is obtained geometrically. Then an image for the intermediate frame is generated by interpolation described later.

In this process, the position occupied by the intermediate frame in Fig. 21 and the marked key frames are specified by the intermediate frame position acquiring unit 14. The marked key frames are notified to the matching processor 18, where a matching computation is performed, based on the base technology, for each of the first image pair and the second image pair. The results of each matching are recorded in the corresponding point file storage 20 as corresponding point files.

The position data on the intermediate frame acquired by the intermediate frame position acquiring unit 14 are sent to the intermediate frame generator 22. The intermediate frame generator 22 carries out an interpolation computation based on the position data and the two corresponding point files.

Fig. 22 illustrates a method of the interpolation. Here, it is assumed that when the first key frame I1, the second key frame I2, the fourth key frame I4 and the fifth key frame I5 are schematically represented by points P1, P2, P4 and P5, respectively, the position of point Pc, which represents the intermediate frame schematically, in the quadrilateral defined by the above-mentioned points satisfies the following condition:

"The point Pc divides at a ratio of (1-t) : t the line segment connecting a point Q, which divides the side connecting P1 and P2 at a ratio of s : (1-s), and a point R, which divides the side connecting P4 and P5 at a ratio of s : (1-s)."

The intermediate frame generator 22 first generates an image corresponding to the point Q by an interpolation at a ratio of s : (1-s), based on the corresponding point file for the first image pair. Then the intermediate frame generator 22 generates an image corresponding to the point R by an interpolation at a ratio of s : (1-s), based on the corresponding point file for the second image pair. Finally, the intermediate frame generator 22 generates an image intermediate between these two images by an interpolation at a ratio of (1-t) : t.

Fig. 23 shows a processing procedure used by the image interpolation apparatus 10. First, the display unit 24 displays a plurality of key frames arranged in a matrix. At the user's clicking or pointing of a mouse button on any arbitrary position within the matrix, that position is acquired as the position for an intermediate frame (S1000).

Thereafter, the intermediate frame position acquiring unit 14 selects the above-mentioned four key frames as marked key frames (S1002) and conveys them to the matching processor 18. The matching processor 18 reads out images of these key frames from the key frame storage 16 and carries out a matching computation for each of the first image pair and the second image pair (S1004). The results of the computation are stored in the corresponding point file storage 20 as two corresponding point files.

The intermediate frame generator 22 first obtains the points Q and R of Fig. 22 individually from the corresponding point files and then obtains an intermediate frame by interpolation (S1006). Finally, an intermediate frame thus generated is displayed (S1008). The intermediate frame is outputted to the network as needed.

Fig. 24 shows an example of the GUI by which the user specifies an arbitrary facial expression on a New Message screen of electronic mail. Shown on this screen are not only entry boxes for destination address, title and body of electronic mail but also an expression select box 32. In the four corners of the expression select box 32 there are displayed face marks showing joy, anger, sadness and happiness, and the user sets a mark 34 at an arbitrary point by moving a mouse pointer 36. Based on a positional relation of the mark 34 to the four face marks, an intermediate frame for the four images that have been recorded in advance is generated and attached to the electronic mail. The recipient of the electronic mail can suppose an emotional state of the mail sender based on the expression of the facial image attached.

The preferred embodiments according to the present invention has been described. The interpolation, which is performed based on a quadrilateral in the above embodiment, may be done using a triangle. Moreover, the corresponding point files, which are generated every time the intermediate frame is to be generated, may instead be generated and prepared in advance by computation for the key frames. In that case, high-speed generation of the intermediate frame can be of course realized, and attaching it to the electronic mail can be processed at high speed.

In Fig. 24, the expression select box 32 is so structured that the user is required to specify a two-dimensional position. This structure, however, may be so modified that the parameters of joy, anger, sadness and happiness are specified by numerical values and that the numerical values are fine-adjusted by some lever or scroll function on the screen. Surprise, normal and other expressions may be further added, and the user may be asked to specify degrees to each of the plurality of expressions thus prepared in advance. The structure may also be such that any specific facial image generated is set as the image to be attached by default.

In addition to the attachment of facial images to electronic mail, this technology may be utilized as photo processing software, for instance. With such software, a facial image having any arbitrary expression may be created from a plurality of facial images having been inputted by the user. And the plurality of facial images to be inputted may come not only from the same person but also from other person or persons, or even from animals. Such a modification may easily produce facial images which are morphing-performed at arbitrary blending or mixing ratios from a variety of faces.

This technology may be applied to an identification photographing apparatus. In this case, a subject is photographed four times and digital images thereof are displayed on the screen in matrix. The subject specifies an arbitrary point within the four images, and an intermediate frame generated by an interpolation processing for the specified position is printed out finally. It is also possible that the subject consciously puts on different expressions before the camera, so that it becomes easier to adjust the image toward a desired expression after the photographing. Moreover, blinking, looking away or other failure to focus on the camera lens may be adjusted easily afterward.

Although the present invention has been described by way of exemplary embodiments, it should be understood that many changes and substitutions may be made by those skilled in the art without departing from the scope of the present invention which is defined by the appended claims.

Further inventive features of the present embodiments are defined in the following paragraphs:

1. An image interpolation method, comprising:

computing matching between a first image pair comprised of two key frames each of which includes a subject photographed with an arbitrary facial expression, and detecting first corresponding point data between the two key frames;
computing matching between a second image pair comprised of two key frames each of which includes a subject photographed with an arbitrary facial expression, and detecting second corresponding point data between the two key frames; and

generating an intermediate frame representing an intermediate facial expression by interpolation, by utilizing positional relations of a first axis and a second axis, the first corresponding point data and the second corresponding point data,

the first axis being determined temporally or spatially between the two key frames of the first image pair, and the second axis being determined temporally or spatially between the two key frames of the second image pair.

2. An image interpolation method, comprising:

arranging in a matrix at predetermined intervals a plurality of key frames each of which includes a subject photographed with an arbitrary facial expression, and displaying the thus arranged key frames on a screen; causing a user to specify an arbitrary point on the screen; and

generating an intermediate frame representing an intermediate facial expression by interpolation, based on a positional relation between the specified point and the plurality of key frames.

3. An image interpolation apparatus, comprising:

an arranging unit which arranges in a matrix at predetermined intervals a plurality of key frames each of which includes a subject photographed with an arbitrary facial expression, and displays the arranged key frames on a screen;

a positional data acquiring unit which acquires positional data on arbitrary points that a user specifies on the screen; and

an intermediate frame generating unit which generates an intermediate frame representing an intermediate facial expression by interpolation, based on a positional relation between the specified point and the plurality of key frames.

4. An image interpolation method, comprising:

displaying to a user a plurality of images corresponding to various facial expressions;

acquiring from the user an instruction on how the images are to be blended; and

generating a new image corresponding to an initially nonexistent expression, according to the instruction,

wherein the instruction is acquired in a manner that blending ratios of the plurality of images at the time of blending are included in the instruction.

5. An image interpolation method according to paragraph 4, wherein, on a screen that displays the plurality of images, the blending ratios are determined based on a relation between display positions of the images and an effecting position that the user inputs to specify on the screen.

6. An image interpolation method which generates a new image corresponding to an initially nonexistent expression, by performing an interpolation processing on at least three images corresponding to various expressions.

7. An image interpolation apparatus, comprising:

a key frame acquiring unit which acquires, via a network, a plurality of key frames photographed by a camera function of a communication terminal;

an arranging unit which arranges in a matrix at predetermined intervals the plurality of key frames each of which includes a subject photographed with an arbitrary facial expression, and displays the arranged key frames on a screen of the communication terminal;

a positional data acquiring unit which acquires positional data on arbitrary points that a user specifies on the screen;

an intermediate frame generating unit which generates an intermediate frame representing an intermediate facial expression by interpolation, based on a positional relation between the specified point and the plurality of key frames; and

a transmitting unit which transmits the intermediate frame to the communication terminal.

**Claims**

1.  An interpolation method, comprising:

acquiring a first image pair comprised of two key frames each of which includes a subject photographed with an arbitrary facial expression, and first corresponding point data between the two key frames;
acquiring a second image pair comprised of two key frames each of which includes a subject photographed with an arbitrary facial expression, and second corresponding point data between the two key frames; and
generating an intermediate frame representing an intermediate facial expression by interpolation, by utilizing positional relations of a first axis and a second axis, the first corresponding point data and the second corresponding point data,
the first axis being determined temporally or spatially between the two key frames of the first image pair, and the second axis being determined temporally or spatially between the two key frames of the second image pair.

2. An image interpolation method according to Claim 1, further comprising:

arranging the acquired plurality of key frames in a matrix at predetermined intervals, and displaying the arranged key frames on a screen; and
causing a user to specify an arbitrary point on the screen,

wherein the interpolation is performed based on positional relations between the specified point and the plurality of key frames.

3. An image interpolation method according to any one of Claims 1-2, wherein the two key frames of the first image pair and the two key frames of the second image pair are facial images with different expressions photographed for a same person.

4. An image interpolation apparatus (10), comprising:

a storage unit (16) which stores a plurality of key frames each of which includes a subject photographed with an arbitrary facial expression;
an acquiring unit (14) which acquires temporal or spatial position data on an intermediate frame representing an intermediate facial expression, in association with the key frames; and
an intermediate frame generating unit (22) which generates an intermediate frame by an interpolation processing, based on corresponding point data on a first image pair comprised of two key frames and a second image pair comprised of two key frames, and the position data,

wherein the first image pair and the second image pair are selected so that a first axis determined temporally or spatially between the two key frames of the first image pair and a second axis determined temporally or spatially between the two key frames of the second image pair do not lie on a same line.

5. An image interpolation apparatus (10) according to Claim 4, further comprising:

a unit (24) which arranges the plurality of key frames in a matrix at predetermined intervals, and displays the arranged key frames on a screen; and
a user interface (12) by which to input externally a specification regarding a temporal or spatial position of the intermediate frame.

6. An image interpolation apparatus (10) according to any one of Claims 4-5, wherein the two key frames of the first image pair and the two key frames of the second image pair are facial images with different expressions photographed for a same person.

7. Computer software having program code for carrying out a method according to claim 1.

8. A computer program, executable by a computer program comprising the functions of:

arranging in a matrix at predetermined intervals a plurality of key frames each of which includes a subject photographed with an arbitrary facial expression, and displaying the thus arranged key frames on a screen;
causing a user to specify an arbitrary point on the screen; and
generating an intermediate frame representing an intermediate facial expression by interpolation, based on a positional relation between the specified point and the plurality of key frames.

9. An image editor, comprising the functions of:

   displaying to a user a plurality of images corresponding to various facial expressions;
   acquiring from the user an instruction on how the images are to be blended; and
   generating a new image corresponding to an initially nonexistent expression, according to the instruction,

   wherein the instruction is acquired in a manner that blending ratios of the plurality of images at the time of blending are included in the instruction.

Fig.1a · · Fig.1b

Fig.1c Fig.1d·

Fig.1e Fig.1f

Fig.1g Fig.1h

Fig.1i Fig.1j

EP 1 308 892 A2

Fig. 2R

Fig. 2A

Fig. 2E

Fig. 2B

Fig. 2D

Fig. 2C

Fig. 3

X Graph

Fig. 4

Fig. 5a

Fig. 5b

START

S1

MULTI-
RESOLUTIONAL
FILTERING

S2

IMAGE MATCHING

END

Fig. 6

START S1

S10

HIERARCHIZE
SOURCE IMAGE

S11

HIERARCHIZE
DESTINATION IMAGE

END S1

Fig. 7

START S10

S100

m ← n

S101

DETECT
CRITICAL POINT

S102

GENERATE M-1
LEVEL IMAGE

S103

m ← m-1

S104

N ← m < 0? → Y

END S10

Fig. 8

Fig. 9

$p^{(3)}$

$p^{(2,0)}$   $p^{(2,1)}$   $p^{(2,2)}$   $p^{(2,3)}$

$p^{(1,0)}$   $p^{(1,1)}$   $p^{(1,2)}$   $p^{(1,3)}$

$p^{(0,0)}$   $p^{(0,1)}$   $p^{(0,2)}$   $p^{(0,3)}$

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

Fig.11

Fig.12

$$p^{(0, s)} \qquad q^{(0, s)}$$

## Fig.13

## Fig.14

START S21

$s \leftarrow 0$
$\lambda \leftarrow 0$
S210

COMPUTE
$f^{(m,s)}$ $(\lambda = i\Delta\lambda)$
S211

$\lambda \leftarrow \lambda + \Delta\lambda$
S212

N ← $\lambda > \lambda_{max}$? S213
Y

DETERMINE
$\lambda_{opt}$ AND $f^{(m,s)}$
S214

$\lambda \leftarrow 0$
$s \leftarrow s+1$
S215

N ← $s > 4$? S16
Y

END S21

Fig.15

Fig.16

Fig.17

START

$s \leftarrow 0$     S40

COMPUTE $f^{(m,s)}$ AND $g^{(m,s)}$
(FORWARD STAGE)     S41

COMPUTE $f'^{(m,s)}$ AND $g'^{(m,s)}$
(REFINEMENT STAGE)     S42

$s \leftarrow s+1$     S43

N     $s > t$ ?     S44

Y

END

**Fig. 18**

Fig.19A

Fig.19B

Fig.19E

Fig.19C

Fig.19D

USER

GUI ~12

~10

INTERMEDIATE FRAME
POSITION ACQUIRING UNIT ~14

~28

KEY FRAME STORAGE ~16

MATCHING PROCESSOR ~18

CORRESPONDING POINT
FILE STORAGE ~20

INTERMEDIATE FRAME
GENERATOR ~22

DISPLAY
UNIT ~24

COMMUNICATION
UNIT ~26

USER

NETWORK

## Fig.20

I1  I2  I3

Ic

I4  I5  I6

I7  I8  I9

**Fig.21**

P1  s  Q  1-s  P2

1-t

Pc

t

P4  R  P5
s  1-s

**Fig.22**

```
                    ┌─────────────┐
                    │    START    │
                    └─────────────┘
                           │
          ┌────────────────────────────────┐
          │   ACQUIRE THE POSITION OF AN    │──── S1000
          │      INTERMEDIATE FRAME         │
          └────────────────────────────────┘
                           │
          ┌────────────────────────────────┐
          │   SELECT REQUIRED KEY FRAMES    │──── S1002
          │                                 │
          └────────────────────────────────┘
                           │
          ┌────────────────────────────────┐
          │      MATCHING COMPUTATION       │──── S1004
          └────────────────────────────────┘
                           │
              ┌──────────────────────┐
              │    INTERPOLATION     │──── S1006
              └──────────────────────┘
                           │
              ┌──────────────────────┐
              │       DISPLAY        │──── S1008
              └──────────────────────┘
                           │
                    ┌─────────────┐
                    │     END     │
                    └─────────────┘
```

# Fig.23

**Fig.24**